# EUROPEAN PATENT SPECIFICATION

(11) **EP 0 415 944 B1**
(45) Date of publication and mention of the grant of the patent: **13.10.1993**
(21) Application number: 89904267.5
(22) Date of filing: 16.03.1989
(51) Int. Cl.: B64D 9/00

(54) **SAFETY DEVICE IN THE CARGO HOLD OF AN AIRCRAFT**
SICHERHEITSANORDNUNG IM FLUGZEUGLADERAUM
DISPOSITIF DE SECURITE DANS LA SOUTE DE CARGAISON D'UN AVION

(30) Priority: 21.03.1988 SE 8801017
(43) Date of publication of application: 13.03.1991
(73) Proprietor: SCANDINAVIAN BELLYLOADING COMPANY AKTIEBOLAG, S-223 70 Lund (SE)
(72) Inventor: HELMNER, Anders Fredrik Gunnar, S-222 48 Lund (SE)
(74) Representative: Ström, Tore
(86) International application number: SE8900136
(87) International publication number: WO8909165

(56) References cited:
- Derwent's abstract No. 86 256782/39, SU 749 023

## Description

The present invention relates to a security device in the cargo hold of an airplane adapted to prevent that goods, which during unloading of the cargo by means of a conveyor disposed in the cargo hold is fed towards the cargo hold opening, is brought into clamping engagement against objects, which are permanently attached to or temporarily stowed beneath the ceiling of the cargo hold in the area of the cargo hold opening, e.g. outer and inner cargo hold hatches, barrier walls and/or cargo netting.

In order to facilitate loading, stowing and unloading goods in the cargo hold of a air-plane the cargo holds are often provided with a cargo hold bottom designed as a conveyor on which the goods during loading is automatically fed towards the inner end of the cargo hold, and which during unloading of the cargo feeds said goods towards the cargo hold opening situated at one end of the cargo hold. The space of the cargo hold which is situated in the area of the cargo hold opening must be kept free from goods during air transportation so that the hatch of the cargo hold is not being blocked and its operation not obstructed. Due to this measures must be taken to prevent that goods during transport is being displaced and falls down into the space immediately inside the closed hatch of the cargo hold. In accordance with the commonly used design this is obtained by means of an inner hatch or wall which is pivotably supported at the cargo hold ceiling and extending in the longitudinal direction of the cargo hold. When goods has been loaded into the cargo hold the inner hatch or wall is swung down to the floor of the cargo hold, thus forming a partition wall preventing transversal displacement of goods into the area of the cargo hold opening. The end of the lowered inner hatch or wall which faces the cargo hold, is further provided with a cargo netting or a resilient protective wall preventing goods from being displaced in the axial direction of the cargo hold and from falling down into the area adjacent the outer hatch of the cargo hold.

In accordance with a commonly used design the outer hatch of the cargo hold is opened by being swung in a direction upwards-inwards into the cargo hold and is secured at the underside of the ceiling of the cargo hold. Then the inner hatch or wall is also swung in a direction upwards towards the ceiling of the cargo hold where it is being secured, the transverse cargo netting or the flexible protective wall being included in said movement and stowed together with the inner and outer hatches of the cargo hold. During unloading of the cargo the outer hatch as well as the inner hatch and netting are thus in stowed position adjacent to the ceiling of the cargo hold and protrude from this position some distance in the downwards direction. It has proved that during unloading of the cargo it may happen that goods which by means of the conveyor has been forwarded towards the cargo hold opening might strike against the end portions of the stowed hatches and get caught. If the feeding action of the conveyor then continues, the hatches and their attachments might be subject to unwanted load which may cause damage, crack formation or fractural impressions in the hatches and their attachments or in the supporting constructions to which they are attached.

The object of the present invention is to provide a security device for preventing that such unwanted power influence may arise during unloading of the goods.

According to the invention this is obtained by means of the features of the characterizing part of claim 1. Preferably the transversally extending flap is pivotably supported at the cargo hold ceiling in front of the cargo hold opening as seen in the forwarding direction of the conveyor, and at a certain predetermined tilting in the discharge direction of the conveyor is adapted to interrupt the driving of said conveyor. The flap is preferably adapted to actuate a limit switch after a predetermined movement in the discharge direction of the conveyor, said limit switch thereby interrupting the current supply to the electrical driving unit of the cargo hold conveyor. Suitably the limit switch is electrically connected with the electrical control panel situated at the cargo hold opening so that it will be possible to restore current supply to the drive unit of the conveyor from the control panel. Suitably the flap is made by a ridge but to a certain extent resilient material, so that a certain power impact is allowed without provoking activation of the limit switch.

The invention is illustrated on the appended drawings in which
- fig 1 shows a transversal sectional view through the cargo hold of an air-plane in the area of the cargo hold opening and with the outer and inner hatch stowed underneath the ceiling of the cargo hold, having the flap according to the invention depending in front of the stowed hatches,
- fig 2 illustrates the attachment of the flap to the ceiling of the cargo hold.

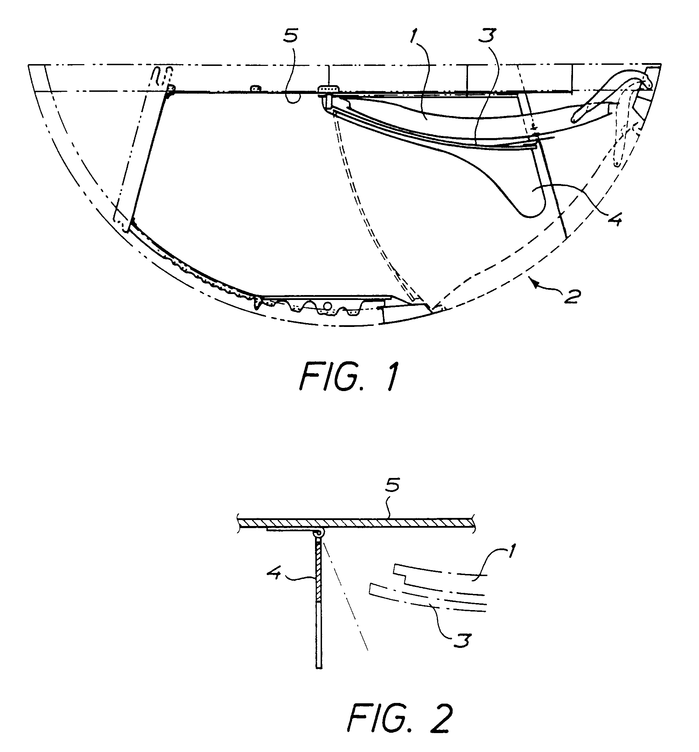

The outer hatch of the cargo hold, schematically shown in fig 1, is swingably suspended inside the cargo hold so that the outer hatch may be swung from closed position for closing the cargo hold opening 2 into the upper stowing position beneath the ceiling 5 of the cargo hold as shown by full lines in the figure. The inner hatch or wall 3 is swingably suspended in the ceiling 5 of the cargo hold and may be swung between the position shown by broken lines and the stowing position beneath the stowed outer hatch 1 as shown by a full line. The flap 4 is swingably suspended in the ceiling 5 of the cargo hold and extends in the transversal direction of the cargo hold at a distance ahead of the stowed hatches 1 and 2. The design of flap 4 is such that when being swung a certain angle towards the hatches 1 and 2, it actuates a limit switch, not shown, which after activation switches off the supply of current to the cargo conveyor disposed at the bottom of the cargo hold and not shown in the figure. The flap 4 is made of a relatively rigid material which, however, is resilient to a certain extent, so that a certain deflection of the flap is permitted without actuating the limit switch. The flap 4 is suitably made from laminated plastic material.

Goods which is stowed in the cargo hold in the vicinity of the ceiling of the cargo hold will thus during discharging at first hit the flap 4, which after being swung a certain angle in the direction towards the stowed hatches 1 and 2 will shut off the discharge of goods, so that a required restowing of the respective parcels can be carried out.

In the described embodiment, the cargo hold is provided with a hatch of the inwardly swingable type. The invention may, however, to the same extent be used in cargo holds having other types of hatch arrangement, e.g. including an outwardly swingable hatch of the cargo hold. Also in case of an outwardly swingable hatch the cargo hold must include an arrangement to prevent that the cargo, during the flight, will drop into the space immediately inside the hatch and thus blocking the operation thereof. The intermediate walls, protection nets etc which are used for this purpose, are being stowed underneath the ceiling of the cargo hold during unloading of the cargo, thus protruding a certain distance in the downward direction from the ceiling of the cargo hold. Other equipment details, such as attachment fittings, which protrude in a direction downwards from the ceiling of the roof in the area at the cargo hold opening, may also result in a risk of goods being stuck during discharging. By means of the device according to the invention this risk is thus avoided no matter of type of arrangement of the cargo hold hatch and no matter which type of cargo hold equipment protruding in a direction downwards from the ceiling of the cargo hold and involves a risk for collision with the goods during discharging by means of a conveyor.

## Claims

1. Security device in the cargo hold of an airplane for preventing that goods which is stowed in the cargo hold and during unloading of the cargo by means of a conveyor is fed towards a cargo hold opening (2) arranged in the cargo hold, during the feeding by means of the conveyor is brought into clamping engagement against objects, which are permanently attached to or temporarily stowed beneath the ceiling (5) of the cargo hold in the area of the cargo hold opening (2), e.g. a hatch (1) of the cargo hold which has been hooked underneath the ceiling, **characterized** by a transversally extending flap (4) which is movable in the cargo hold, said flap being disposed in front of the cargo hold opening (2) as seen in the discharge direction of the conveyor, said flap having a shape which substantially covers the sectional profile of said permanent or temporary object protruding from the cargo hold ceiling into the cargo hold, said flap (4), at a certain predetermined movement in the discharge direction of the conveyor being adapted to interrupt the driving of said conveyor.

2. Security device as claimed in claim 1, **characterized** in that the flap (4) is pivotably supported at the ceiling (5) of the cargo hold in front of the cargo hold opening (2), as seen in the forwarding direction of the conveyor, and at a certain predetermined tilting in the discharge direction of the conveyor is adapted to interrupt the driving of said conveyor.

3. Security device as claimed in claims 1 or 2, **characterized** in that the flap (4), after a predetermined movement in the discharge direction of the conveyor, is adapted to actuate a switch for interrupting the supply of current to an electrical driving device of the conveyor.

4. Security device as claimed in claim 3, **characterized** in that the switch is electrically connected with a control panel disposed at the cargo hold opening (2), so that supply of current to the drive unit of the conveyor may be restored from said control panel.

5. Security device as claimed in any of the preceeding claims, **characterized** in that the flap (4) is designed from a rigid , but to a certain degree resilient material, so that a certain power actuation on the flap is permitted without the switch being activated.

## Patentansprüche

1. Sicherheitsvorrichtung im Flugzeugladeraum, um zu verhindern, daß Waren, die im Laderaum gelagert sind und beim Entladen des Laderaumes durch eine Fördereinrichtung zur Laderaumöffnung (2) befördert werden, die im Laderaum angeordnet ist, während der Beschickung durch die Fördereinrichtung mit Gegenständen verklemmt werden, die dauerhaft an die Decke (5) des Laderaumes im Bereich der Laderaumöffnung (2) angebracht oder zeitweilig darunter gelagert sind, zum Beispiel die Luke (1) des Laderaumes, die unterhalb der Decke eingehakt ist, **gekennzeichnet durch** eine sich quer erstreckende Klappe (4), die im Laderaum beweglich ist, wobei diese Klappe in Abgaberichtung der Fördereinrichtung gesehen vor der Laderaumöffnung (2) angeordnet ist, diese Klappe eine Form aufweist, die das Querschnittsprofil des dauerhaften oder zeitweiligen Gegenstandes abdeckt, der von der Laderaumdecke in den Laderaum vorsteht, wobei diese Klappe (4) bei einer bestimmten vorher festgelegten Bewegung in Abgaberichtung der Fördereinrichtung so gestaltet ist, daß sie den Antrieb der Fördereinrichtung unterbricht.

2. Sicherheitsvorrichtung nach Anspruch 1, **dadurch gekennzeichnet,** daß die Klappe (4) an der Decke (5) des Laderaumes in Vorwärtsrichtung der Fördereinrichtung gesehen, vor der Laderaumöffnung (2) schwenkbar gehalten wird und mit einer bestimmten vorher festgelegten Neigung in Abgaberichtung der Fördereinrichtung gestaltet ist, um den Antrieb dieser Fördereinrichtung zu unterbrechen.

3. Sicherheitsvorrichtung nach Anspruch 1 oder 2, **dadurch gekennzeichnet**, daß die Klappe (4) nach einer bestimmten Bewegung in Abgaberichtung der Fördereinrichtung so gestaltet ist, daß sie einen Schalter zur Unterbrechung der Stromzufuhr zur elektrischen Antriebseinrichtung der Fördereinrichtung betätigt.

4. Sicherheitsvorrichtung nach Anspruch 3, **dadurch gekennzeichnet,** daß der Schalter elektrisch mit der Schalttafel verbunden ist, die an der Laderaumöffnung (2) angeordnet ist, so daß die Stromzufuhr zur Antriebseinheit der Fördereinrichtung von dieser Schalttafel wiederhergestellt werden kann.

5. Sicherheitsvorrichtung nach einem der vorstehenden Ansprüche, **dadurch gekennzeichnet,** daß die Klappe aus einem starren jedoch bis zu einem bestimmten Grad elastischen Material gestaltet ist, so daß eine bestimmte Krafteinwirkung auf die Klappe erlaubt ist, ohne daß der Schalter betätigt wird.

## Revendications

1. Dispositif de sécurité dans la soute d'un avion pour éviter que les marchandises stockées dans la soute et pendant le déchargement de la cargaison au moyen d'un convoyeur sont avancées vers une ouverture (2) de la soute ménagée dans la soute, pendant l'avancement au moyen du convoyeur sont amenées en engagement de fixation contre des objets, qui sont attachés en permanence à ou sont stockés temporairement au-dessous du plafond (5) de la soute dans la zone de l'ouverture (2) de la soute, par exemple un panneau (1) de la soute qui a été accroché au-dessous du plafond, caractérisé par un volet s' étendant transversalement (4) qui est mobile dans la soute, ledit volet étant disposé à l'avant de l'ouverture (2) de la soute telle qu'elle est vue dans le sens de déchargement du convoyeur, ledit volet ayant une forme qui recouvre sensiblement le profil en coupe dudit objet permanent ou temporaire en saillie à partir du plafond de la soute dans la soute, ledit volet (4), à un certain mouvement prédéterminé dans le sens du déchargement du convoyeur étant destiné à interrompre l'entraînement dudit convoyeur.

2. Dispositif de sécurité selon la revendication 1, caractérisé en ce que le volet (4) est supporté en pivotement au droit du plafond (5) de la soute à l'avant de l'ouverture (2) de la soute, telle qu'elle est vue dans le sens d'avancement du convoyeur, et à une certaine inclinaison prédéterminée dans le sens du déchargement du convoyeur est destiné à interrompre l'entraînement dudit convoyeur.

3. Dispositif de sécurité selon les revendications 1 ou 2, caractérisé en ce que le volet (4), après un mouvement prédéterminé dans la direction du déchargement du convoyeur, est destiné à actionner un commutateur pour interrompre la fourniture de courant à un dispositif d'entraînement électrique du convoyeur.

4. Dispositif de sécurité selon la revendication 3, caractérisé en ce que le commutateur est relié électriquement à un panneau de commande disposé à l'ouverture (2) de la soute, de sorte que la fourniture de courant à l'ensemble d'entraînement du convoyeur peut être rétablie à partir dudit panneau de commande.

5. Dispositif de sécurité selon l'une quelconque des revendications précédentes, caractérisé en ce que le volet (4) est réalisé en matière rigide, mais élastique à un certain degré, de sorte qu'un certain actionnement mécanique du volet est permis sans qu'il y ait mise en marche du commutateur.
